Europäisches Patentamt

European Patent Office

Office européen des brevets

(19)

(11) Veröffentlichungsnummer: **0 002 730**
**B1**

(12) **EUROPÄISCHE PATENTSCHRIFT**

(21) Anmeldenummer: **78101668.8**

(22) Anmeldetag: **13.12.78**

(51) Int. Cl.³: **A 47 C 7/38, B 60 N 1/06**

(54) Kopfstütze, insbesondere für Kraftfahrzeugsitze.

(30) Priorität: **13.12.77 DE 2755411**

(43) Veröffentlichungstag der Anmeldung:
**11.07.79 Patentblatt 79/14**

(45) Bekanntmachung des Hinweises auf die Patenterteilung:
**18.02.81 Patentblatt 81/7**

(84) Benannte Vertragsstaaten:
**BE FR GB IT SE**

(56) Entgegenhaltungen:
**DE - A - 1 680 264**
**DE - A - 2 318 381**
**FR - A - 2 320 715**

(73) Patentinhaber: **No-Sag Drahtfedern GmbH**
**D-4835 Rietberg 2 - Neuenkirchen (DE)**

(72) Erfinder: **Berghoff, Günter**
**Detmolder Strasse 33**
**D-4835 Rietberg 2 (DE)**

(72) Erfinder: **Lohnherr, Heinrich**
**Austenfeld 1**
**D-4831 Langenberg (DE)**

(74) Vertreter: **Buschhoff, Josef, Dipl.-Ing. et al,**
**Kaiser-Wilhelm-Ring 24 Postfach 190 408**
**D-5000 Köln 1 (DE)**

Courier Press, Leamington Spa, England.

Kopfstütze, insbesondere für Kraftfahrzeugsitze

Die Erfindung betrifft eine Kopfstütze, insbesondere für Kraftfahrzeugsitze, die mit zwei Stäben in Halterungen in der Rückenlehne des Sitzes verankert ist, wobei jeder Stab um einen zur oberen Lehnenkante parallelen Schwenkzapfen schwenkbar und in verschiedenen Winkelstellungen zur Lehne unter Federwirkung in Rasten feststellbar ist und der Schwenkzapfen zum Ausrasten der Kopfstütze in Langlöchern gleitet, die sich im wesentlichen in Längsrichtung des Stabes erstrecken.

Es ist eine Kopfstütze dieser Art bekannt (DE—A—23 18 381), bei der an jedem Stabende ein Schwenkzapfen und eine Verzahnung angeordnet sind, von denen der Schwenkzapfen mit Langlöchern und die Verzahnung mit Zahnrasten zusammenwirken, die in der Halterung angeordnet sind, welche sich im Inneren der Rückenlehne befinden, wo auch die übrigen Teile des Mechanismus zur Winkelverstellung der Kopfstütze untergebracht sind. Die Kopfstütze ist deshalb nur zusammen mit einer ganz bestimmten Rückenlehne verwendbar, deren Verstellmechanismus ihr angepaßt ist. Es ist ferner notwendig, den Verstellmechanismus in die Rückenlehne des Sitzes fest einzubauen, da die Enden der Kopfstützhalterungen mit ihren vorstehenden Schwenkzapfen nicht nachträglich in den Verstellmechanismus eingeführt werden können.

Aufgabe der Erfindung ist es, eine in ihrer Winkellage zur Rückenlehne verstellbare Kopfstütze zu schaffen, die sehr einfach und aus wenigen, einfachen Teilen hergestellt und zusammen mit ihrem Verstellmechanismus in rohrförmige Halterungen beliebiger Sitzlehnen so eingebaut werden kann, daß sich der Verstellmechanismus im Inneren der Rückenlehne befindet.

Diese Aufgabe wird mit der Erfindung dadurch gelöst, daß die Rasten und Langlöcher für jeden Schwenkzapfen in einer Führungshülse angeordnet sind, welche das freie Ende des Stabes umschließt und mit dem Stab in die Halterung in der Rückenlehne einschiebbar ist.

Diese Ausgestaltung hat den Vorteil, daß der Kopfstütz-Verstellmechanismus, obgleich an der Kopfstütze selbst angebracht, ins Innere der Rückenlehne verlegt wird und dort weder stört noch zu Verletzungen Anlaß geben kann. Hierbei hat der Verstellmechanismus einen sehr geringen Platzbedarf und verschwindet in der hierfür vorgesehenen Halterung an der Rückenlehne, die ihn schützend umschließt. Die Kopfstütze selbst kann dann aus einem einfachen, gepolsterten Bügel mit gepolsterten Querstreben bestehen, welche den hinter dem mit der Kopfstütze versehenen Sitz sitzenden Personen den Durchblick freigibt.

Besonders zweckmäßig ist es, wenn in jedem freien Stabende koplanar und im Abstand vom Schwenkzapfen ein Rastzapfen angeordnet ist, der in einander gegenüberliegende, mehrere untereinander verbundene Rasten bildende Ausnehmungen in den Wandungen der Führungshülse eingreift. Eine solche Ausführung ist besonders einfach, da lediglich in jedem Stabende zwei Löcher gebohrt und die Zapfen hindurchgesteckt werden müssen, die in ausgestanzte Rasten bzw. Langlöcher der Hülse eingreifen können.

Die Rasten in der Führungshülse werden vorzugsweise von V-förmigen Nuten gebildet, deren nächst der Vorderseite der Kopfstütze angeordneter Schenkel parallel zur Längsachse des Führungsrohres verläuft. Diese V-förmigen Nuten gestatten die Verschwenkung der Kopfstütze in zwei Stellungen, was normalerweise ausreichend ist. Durch die erfindungsgemäße Anordnung der Nuten ist gewährleistet, daß die Kopfstütze in jeder Stellung nicht nach hinten schlagen kann, wenn der Kopf bei einem Aufprall gegen sie geschleudert wird.

Nach einem weiteren Merkmal der Erfindung kann der Schwenkzapfen in geringem Abstand vom Stabende angeordnet sein und der Rastfeder als Widerlager dienen, deren anderes Ende sich gegen einen ins Innere der Führungshülse hineinragenden Vorsprung abstützt. Eine solche Ausführung ist besonders einfach, da es genügt, im unteren Bereich der Hülse eine Druckfeder über das Stabende oder in den Stab hineinzuschieben, wenn dieser rohrförmig ausgebildet ist oder in seinem unteren Ende eine Axialbohrung aufweist.

Die Führungshülse ist im Querschnitt zweckmäßig U-förmig und an ihrer Unterseite durch einen den Vorsprung bildenden, nach innen gebogenen Teil ihrer Wandungen geschlossen und von einem dicht anliegenden Kunststoffrohr umgeben. Diese Ausbildung erlaubt eine besonders einfache Herstellung, da die Hülse zunächst als ebenes Blech gestanzt, mit den Langlöchern und Ausnehmungen versehen und nur abgekantet werden muß, wobei die Seitenteile gleichzeitig über die in den Stabenden steckenden Zapfen geschoben werden. Danach ist es lediglich erforderlich, die Druckfeder einzusetzen und das untere Ende der Hülsenwandung nach innen zu biegen und das Kunststoffrohr überzustreifen, welches den gesamten Verstellmechanismus schützend umschließt und für einen festen Sitz in der Halterung sorgt, wobei es zugleich Klappergeräusche unterbindet.

In der anschließenden Beschreibung ist eine Ausführungsform der Erfindung anhand von Zeichnungen näher erläutert wird. Es zeigt:

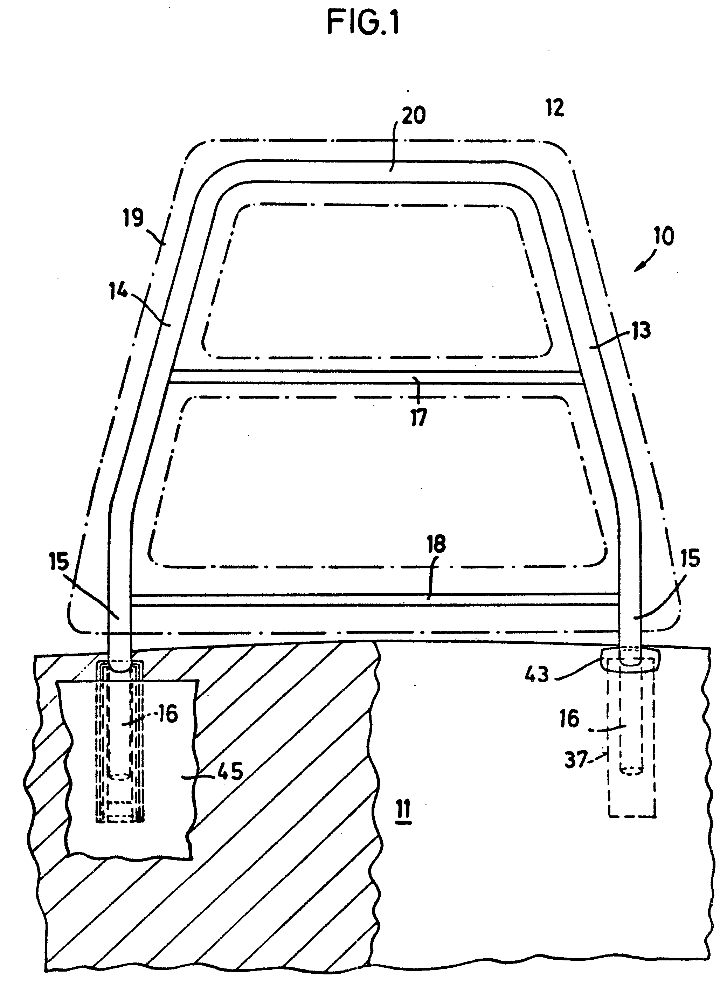

Fig. 1, eine Kopfstütze nach der Erfindung in einer Vorderansicht,

Fig. 2, die Kopstütze nach Fig. 1 in zwei Stellungen A und B in einer Seitenansicht, wobei ihre unteren Enden in die Halterung in der Rückenlehne eingesetzt sind,

Fig. 3, den Gegenstand der Fig. 2 in einem Längsschnitt nach Linie III—III und

Fig. 4, den Gegenstand der Fig. 2 in einem Querschnitt nach Linie IV—IV.

In den Zeichnungen ist mit 10 eine Kopfstütze in ihrer Gesamtheit bezeichnet, die in der Rückenlehne 11 eines hier nicht näher dargestellten Kraftfahrzeugsitzes verankert ist. Die Kopfstütze besteht aus einem im wesentlichen U-förmigen Bügel 12, dessen zunächst trapezförmig divergierende Schenkel 13 und 14 in die parallel verlaufenden Stäbe 15 übergehen, deren freie Enden 16 in die Rückenlehne 11 hineinreichen und dort in weiter unten noch näher beschriebener Weise verankert sind. Die Schenkel 13 und 14 sind durch eine Traverse 17 und die Stäbe 15 durch eine Traverse 18 in Querrichtung ausgesteift, wobei die Traversen 17 und 18 mit dem Bügel verlötet oder verschweißt sind.

Der Bügel 12 kann aus einem vollen Stab bestehen. Im vorliegenden Ausführungsbeispiel wird er von einem Rohr gebildet. Alle Teile des Bügels mit Ausnahme der Stabenden 16 sind mit einer Polsterung 19 ummantelt, die jedoch zwischen dem oberen Holm 20 und der Traverse 17 einerseits und zwischen den Traversen 17 und 18 anderseits den Durchblick frei läßt.

In jedem der beiden freien Stabenden 16 sind koplanar und im Abstand voneinander je zwei Zapfen 21 und 22 angeordnet, die in das Stab- bzw. Rohrende 16 durchdringenden Bohrungen sitzen und deren Enden 21a, 21b bzw. 22a, 22b über den Außenumfang des Stabes 16 vorstehen. Über das untere Ende 16 des Stabes 15 ist eine im Querschnitt U-förmige Halte- und Führungshülse 23 geschoben, die an ihrer Unterseite 24 durch einen nach innen gebogenen Teil mindestens teilweise verschlossen ist, der einen Vorsprung 25 bildet. Gegen diesen Vorsprung 25 legt sich das eine Ende 26 einer Rastfeder 27 an, deren anderes Ende 28 ins Innere des Stabendes 16 hineinragt und sich gegen den Zapfen 21 abstützt, der sich im geringen Abstand vom unteren Ende 34 des Stabes 15 befindet.

Die Führungshülse 23 hat in ihren einander gegenüberliegenden Seitenwänden 29 und 30 im unteren Teil einander gegenüberliegende Langlöcher 31 und 32, die sich parallel zur Längsachse 33 des Stabes 15 und der Führungshülse 16 erstrecken und in die die vorspringenden Enden 21a und 21b des einen Zapfens 21 eingreifen.

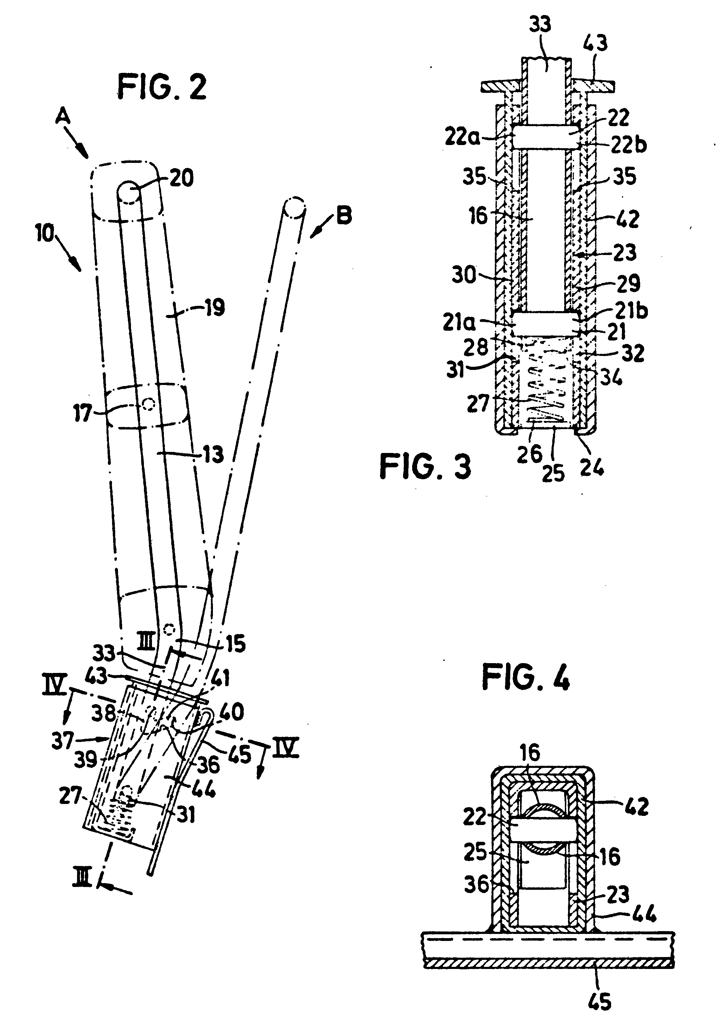

Oberhalb der Langlöcher 31 und 32 sind im Bereich des anderen Zapfens 22 in den Seitenwänden 29 und 30 der Führungshülse 23 Ausnehmungen 35 vorgesehen, die von V-förmigen Nuten 36 gebildet werden, deren einer nächst der Vorderseite 37 angeordneter Schenkel 38 parallel zur Längsachse 33 der Führungshülse 23 verläuft und eine Raste 39 für den Zapfen 22 bildet. Die zweite Raste 40 bildet dann der zweite, schräg zur Achse verlaufende Schenkel 41 der V-förmigen Nute 36 (Fig. 2).

Jede Führungshülse 23 wird von einem Kunststoffrohr 42 umschlossen, das an seiner Oberseite mit einer Abdeckung 43 versehen ist, die am Umfang des Stabendes 16 dicht anliegt und die Führungshülse 23 an ihrer Oberseite abdeckt.

Wie insbesondere aus den Fig. 2, 3 und 4 hervorgeht, sind die mit der Führungshülse 23 und dem Kunststoffrohr 42 versehenen Stabenden in hierfür vorgesehene Halterungen 44 eingeschoben, die am Lehnenrahmen 45 festgeschweißt sind.

Die Erfindung ist nicht auf das Ausführungsbeispiel beschränkt. Beispielsweise kann der Verstellmechanismus auch bei solchen Kopfstützen angewendet werden, die vollgepolstert sind und keinen Durchblick gewähren. Es ist auch möglich, anstelle der Rastfeder eine Zugfeder vorzusehen, welche die Kopfstütze in der Führungshülse in den nach unten offenen Rasten nach oben zieht. Schließlich ist es auch möglich, anstelle der einseitig offenen Führungshülse ein geschlossenes Führungsrohr zu verwenden, das nicht nur einen quadratischen, sondern auch einen kreisrunden Querschnitt haben kann. Außerdem ist es möglich, die Langlöcher und V-förmigen Nuten in ihrer Anordnung derart zu vertauschen, daß sich die Langlöcher oben im Bereich des Zapfens 22 und die V-förmige Nute unten im Bereich des Zapfens 21 befindet. Diese Ausgestaltung hat den Vorteil, daß der Schwenkpunkt der Kopfstütze in die Nähe des oberen Randes des Rückenlehnenrahmens verlegt wird, was dann besonders zweckmäßig ist, wenn die Durchtrittsöffnung für das Stabende in der Polsterung der Rückenlehne möglichst klein gehalten werden soll. In diesem Falle ist es zweckmäßig, den Vorsprung im Inneren der Führungshülse 23 etwa in der Mitte der Führungshülse anzuordnen und die Rastfeder dann gegen diesen Vorsprung und gegen den oberen Zapfen abzustützen. Auch eine solche Ausführungsform fällt mit in den Rahmen der Erfindung.

## Patentansprüche

1. Kopfstütze, insbesondere für Kraftfahrzeuge, die mit zwei Stäben (15) in Halterungen (44) in der Rückenlehne (11) des Sitzes verankert ist, wobei jeder Stab (15) um einen zur oberen Lehnenkante parallelen Schwenkzapfen (21) schwenkbar und in verschiedenen Winkelstellungen zur Lehne (11) unter Federwirkung in Rasten (39, 40) feststellbar ist und der Schwenkzapfen (21) zum, Ausrasten der Kopfstütze (10) in Langlöchern (31, 32) gleitet, die sich im wesentlichen in Längsrichtung des Stabes (15) erstrecken, dadurch gekennzeichnet, daß die Rasten (39, 40) und Langlöcher (31, 32) für jeden Schwenkzapfen (21) in einer Führungshülse (23) angeordnet sind, welche das freie Ende (16) des Stabes (15) umschließt und mit dem Stab (15) in die Halterung (44) in der Rückenlehne (11) einschiebbar ist.

2. Kopfstütze nach Anspruch 1, dadurch gekennzeichnet, daß in jedem freien Stabende (16) koplanar und im Abstand vom Schwenkzapfen (21) ein Rastzapfen (22) angeordnet ist, der in einander gegenüberliegende Ausnehmungen (35) in den Wandungen (29, 30) der Führungshülse (23) eingreift, welche mehrere, untereinander verbundene Rasten (39, 40) bilden.

3. Kopfstütze nach Anspruch 1 oder 2, dadurch gekennzeichnet, daß die Rasten (39, 40) in der Führungshülse (23) von V-förmigen Nuten (36) gebildet werden, deren nächst der Vorderseite (37) der Kopfstütze (10) angeordneter Schenkel (38) parallel zur Längsachse (33) der Führungshülse (23) verläuft.

4. Kopfstütze nach einem der Ansprüche 1 bis 3, dadurch gekennzeichnet, daß der Schwenkzapfen (21) in geringem Abstand vom Stabende angeordnet ist und der Rastfeder (27) als Widerlager dient, deren anderes Ende (26) sich gegen einen ins Innere der Führungshülse (23) hineinragenden Vorsprung (25) abstützt.

5. Kopfstütze nach einem der Ansprüche 1 bis 4, dadurch gekennzeichnet, daß die Führungshülse (23) im Querschnitt U-förmig und an ihrer Unterseite durch einen den Vorsprung (25) bildenden, nach innen gebogenen Teil seiner Wandungen geschlossen ist und von einem dicht anliegenden Kunststoffrohr (42) umschlossen wird.

## Claims

1. Head rest, particularly for motor vehicles, which is anchored in holders (44) in the back (11) of the seat by two rods (15), each rod (15) being pivotable about a pivot pin (21), which is parallel to the upper edge of the back and lockable in catches (39,40) under the action of a spring element in various angular positions relative to the back (11), and the pivot pin (21) sliding, to disengage the head rest (10), in elongated slots (31,32) which extend essentially in the longitudinal direction of the rod (15), characterised in that the catches (39,40) and elongated slots (31,32) for each pivot pin (21) are located in a guide sleeve (23), which encloses the free end (16) of the rod (15) and can be inserted, with the rod (15), into the holder (44) in the back (11).

2. Head rest according to Claim 1, characterised in that a locking pin (22) is arranged in each free rod end (16) in the same plane as and at a distance from the pivot pin (21) and engages in recesses (35) lying opposite one another in the walls (29,30) of the guide sleeve (23), which recesses form a plurality of inter-connected catches (39,40).

3. Head rest according to Claim 1 or 2, characterised in that the catches (39,40) in the guide sleeve (23) are formed by V-shaped grooves (36), the part (38) of the said grooves located next to the front side (37) of the head rest (10) running parallel to the longitudinal axis (33) of the guide sleeve (23).

4. Head rest according to any one of Claim 1 to 3, characterised in that the pivot pin (21) is arranged at a short distance from the rod end and serves as an abutment for the catch spring (27), the other end (26) of the spring bears against a projection (25) extending into the interior of the guide sleeve (23).

5. Head rest according to any one of Claims 1 to 4, characterised in that the guide sleeve (23) has a U-shaped cross-section and is closed, on its lower side, by an inwardly bent section of its walls, which forms the projection (25), and is enclosed by a tightly fitting plastic tube (42).

## Revendications

1. Appui-tête, en particulier pour véhicules automobiles, qui est ancré à l'aide de deux barres (15) dans des montures (44) prévues dans le dossier (11) du siège, chaque barre (15) pouvant être basculée autour d'une cheville de basculement (21) parallèle au bord supérieur du dossier et être bloquée, dans différentes positions angulaires par rapport au dossier (11), sous l'action de ressorts, dans des crans d'arrêt (39, 40), cette cheville de basculement (21) glissant, en vue du décliquetage de l'appui-tête (10), dans des trous oblongs (31, 32) orientés essentiellement dans le sens longitudinal de la barre (15), caractérisé en ce que les crans d'arrêt (39, 40) et les trous oblongs (31, 32) pour chaque cheville de basculement (21) sont prévus dans une douille de guidage (23) qui entoure l'extrémité libre (16) de la barre (15) et peut être glissée, ensemble avec la barre (15), dans la monture (44) prévue dans le dossier (11).

2. Appui-tête suivant la revendication 1, caractérisé en ce qu'il est prévu dans l'extrémité libre (16) de chaque barre, dans le même plan que la cheville de basculement (21) et à une certaine distance de cette dernière, une cheville d'arrêt (22) qui s'engage dans des évidements opposés (35) formés dans les parois (29, 30) de la douille de guidage (23), évidements qui constituent plusieurs crans d'arrêt (39, 40) communiquant entre eux.

3. Appui-tête suivant la revendication 1 ou 2, caractérisé en ce que les crans d'arrêt (39, 40) formés dans la douille de guidage (23) sont constitués par des encoches en V (36), dont le flanc (38) le puls proche de la face antérieure (37) de l'appui-tête (10) est parallèle à l'axe longitudinal (33) de la douille de guidage (23).

4. Appui-tête suivant l'une quelconque des revendications 1 à 3, caractérisé en ce que la cheville de basculement (21) est située à une faible distance de l'extrémité de la barre et constitue un butée pour le ressort d'encliquetage (27), l'autre extrémité (26) de ce ressort prenant appui contre une saillie (25) qui s'avance vers l'intérieur de la douille de guidage (23).

5. Appui-tête suivant l'une quelconque des revendications 1 à 4, caractérisé en ce que la douille de guidage (23) présente une section en U, est fermée à son extrémité inférieure par une partie de ses parois pliée vers l'intérieur en formant la saillie (25) et est entourée d'un tube (42) en matière synthétique, qui s'applique intimement contre la douille.

# FIG.1

# FIG. 2

# FIG. 3

# FIG. 4